# EUROPÄISCHE PATENTANMELDUNG

(11) **EP 3 524 938 A1**
(43) Veröffentlichungstag der Anmeldung: **14.08.2019**
(21) Anmeldenummer: 19154728.0
(22) Anmeldetag: 06.03.2014
(51) Int. Cl.: G01C 21/36, G06F 3/023, G06F 3/0488, G06F 17/24, G06F 3/0338, G06F 3/0482, G06F 3/0484

(54) **EINEM FAHRZEUG ZUGEORDNETE VORRICHTUNG MIT BUCHSTABIEREINRICHTUNG - VERVOLLSTÄNDIGUNGS-VORSCHLAG**

(30) Priorität: 12.03.2013 DE 102013004239
(62) Teilanmeldung aus: 14708808.2
(71) Anmelder: Audi AG, 85045 Ingolstadt (DE)
(72) Erfinder: BOUAZIZ, Tahar, 85055 Ingolstadt (DE); BETZ, Michael, 85080 Gaimersheim (DE); KÖBERLE, Carolin, 85057 Ingolstadt (DE); DÖTSCH, Markus, 93059 Regensburg (DE)

(57) **Zusammenfassung**

Die vorliegende Erfindung betrifft eine einem Fahrzeug zugeordnete Vorrichtung, mit einer Bedieneinrichtung, mit der wenigstens alphanumerische Zeichen und/oder Symbole auswählbar und zu einer Zeichen- oder Funktionsgruppe zusammenstellbar sind, und mit einer Anzeigevorrichtung, mit der mittels einer Anzeigeeinrichtung 1 auswählbare Zeichen und/oder Symbole in wenigstens einem Auswahlfeld 2, ausgewählte Zeichen, Symbole, Zeichen- oder Funktionsgruppe in wenigstens einem Eingabefeld 3 anzeigbar sind, einer Speichereinrichtung mit darin gespeicherten Daten, und einer Datenverarbeitungseinrichtung zum Auswählen von Daten aus den in der Speichereinrichtung gespeicherten Daten nach vorgebbaren Kriterien unter Berücksichtigung der bisher von einem Nutzer ausgewählten Zeichen und/oder Symbole, wobei die Vorrichtung dazu eingerichtet ist, auf der Anzeigeeinrichtung 1 einen Vervollständigungs-Vorschlag 4 mit wenigstens einem Vervollständigungs-Element in unmittelbarer Nachbarschaft zu einem im Auswahlfeld 2 angewählten Zeichen oder Symbol anzuzeigen, sofern durch die Datenverarbeitungseinrichtung eine mögliche Vervollständigung des/der bisher ausgewählten Zeichen(s) und/oder Symbols/Symbole auf Grundlage der Daten in der Speichereinrichtung unter Berücksichtigung des/der bisher von einem Nutzer ausgewählten Zeichen(s) und/oder Symbols/Symbole und des vom Nutzer angewählten Zeichens oder Symbols ermittelt wird; das wenigstens eine Vervollständigungs-Element mittels der Bedieneinrichtung durch einen Nutzer anwählbar ist; und ein angewähltes Vervollständigungs-Element von einem Nutzer mittels der Bedieneinrichtung ausgewählt werden kann.

## Beschreibung

Die vorliegende Erfindung betrifft eine einem Fahrzeug zugeordnete Vorrichtung mit Buchstabiereinrichtung.

In modernen Fahrzeugen (Kraftfahrzeugen) ist oftmals eine Anzahl an Vorrichtungen vorhanden, bei denen und/oder für die Benutzereingaben vorgenommen werden können. Hierbei können die Vorrichtungen nicht nur aktiviert oder deaktiviert, d.h. ein- und ausgeschaltet werden, sondern es können oftmals auch Einstellungen vorgenommen, Auswahlen getroffen oder Eingaben getätigt werden.

Beispiele für derartige Vorrichtungen in Fahrzeugen sind ein satellitengestütztes Navigationssystem, eine Multi-Media-Anlage, eine Automobil-Telefonanlage oder eine in ein Fahrzeug integrierte Vorrichtung für einen Internetzugang.

Die Benutzereingaben für derartige Vorrichtungen können auf verschiedene Arten und Weisen erfolgen, wobei derzeit eine Eingabe unter Verwendung eines Dreh-/Drück-Stellers, Joysticks oder einer oder mehrerer Tasten wohl die am häufigsten verwendete Vorgehensweise darstellt. Daneben sind weitere Eingabemöglichkeiten bekannt, wie beispielsweise unter Verwendung eines Touchpad oder einer berührungsempfindlichen Anzeigeeinrichtung (Bildschirm), oder mittels Spracheingabe. In allen Fällen kann eine Anzeige der vorgenommenen Einstellungen/Auswahlen/Eingaben auf einer Anzeigeeinrichtung (Bildschirm, Head-Up-Display) erfolgen.

Bei den oben erwähnten Vorrichtungen können oder müssen zur Bedienung eine Abfolge von Zeichen (Buchstaben, Zahlen, Leerzeichen, etc.) und oder Symbolen ausgewählt oder eingegeben werden, beispielsweise bei der Zieleingabe für ein satellitengestütztes Navigationssystem, der Eingabe einer neuen Kontaktperson in die oder der Auswahl einer bekannten Kontaktperson aus der Speichereinrichtung einer Automobil-Telefonanlage, bei der Bedienung einer Vorrichtung für einen mobilen Internetzugang, etc.

Hierbei ist eine rasche, einfache und bequeme Auswahl und Eingabe von Zeichen und/oder Symbolen erwünscht, in Bezug auf eine möglichst geringe Ablenkung vom Straßenverkehr sogar sehr erwünscht.

Es ist bekannt, dass für einen Nutzer eine Erleichterung und/oder Beschleunigung der Eingabe/Auswahl zur Verfügung gestellt werden kann, indem ihm nach der Eingabe/Auswahl von wenigstens einem Zeichen/Symbol eine Vervollständigung der bereits eingegebenen/ausgewählten Zeichen/Symbole angeboten und/oder angezeigt wird, wobei die Vorschläge für eine Vervollständigung nach vorgebbaren Kriterien aus einer in einer Speichereinrichtung gespeicherten Daten ausgewählt werden. In seiner einfachsten Form werden hierbei die Daten mit den bisher eingegebenen/ausgewählten Zeichen/Symbolen verglichen und nur solche Daten angezeigt, die die eingegebenen/ausgewählten Zeichen/Symbolen in der gleichen Reihenfolge enthalten.

Die DE 10 2005 018 467 A1 hat ein Verfahren zur Zielauswahl in einem Navigationssystem zum Gegenstand, bei dem jedes Ziel aus einer Gesamtheit aller Ziele durch Zielparameter definiert ist und durch Eingeben einzelner Zeichen für jeweils einen Zielparameter eine Menge der möglichen Ziele aus der Gesamtheit aller Ziele schrittweise eingeschränkt wird. Es ist vorgesehen, dass bei dem Eingeben der Zeichen von einem Zielparameter zu einer Eingabe eines Zeichens für einen anderen Zielparameter gewechselt werden kann.

Die DE 10 2007 023 313 A1 beschreibt eine Anzeigeeinrichtung und ein Verfahren zum Betrieb einer elektronischen Anzeigeeinrichtung zur Anzeige mehrerer Zeichen eines Zeichensatzes, insbesondere zur Anzeige von Buchstaben und/oder Ziffern. Zumindest ein Zeichen des Zeichensatzes kann durch Betätigen einer Anwahleinrichtung angewählt und durch Betätigen einer Auswahleinrichtung zur Weiterverarbeitung ausgewählt werden. Die Zeichen werden dabei auf einer gekrümmten Bogenlinie angeordnet und angezeigt.

Die DE 10 2008 049 636 A1 beschreibt ein Verfahren zum Eingeben eines Ziels für ein Navigationssystem. Das Verfahren umfasst ein Erfassen einer Zeichenkette, welche von einem Benutzer als Teil einer Bezeichnung des Ziels eingegeben wird, und ein Bestimmen einer Menge von Zielbezeichnungen in Abhängigkeit von der erfassten Zeichenkette. Die Menge von Zielbezeichnungen wird bestimmt, indem diejenigen Zielbezeichnungen aus einem Vorrat an Zielbezeichnungen ausgewählt werden, welche die Zeichenkette umfassen. Das Verfahren umfasst weiterhin ein Anzeigen der bestimmten Menge von Zielbezeichnungen auf einer Anzeigeeinheit für den Benutzer. Schließlich wird eine von dem Benutzer getroffene Auswahl einer Zielbezeichnung aus der angezeigten Menge von Zielbezeichnungen erfasst.

Die DE 10 2009 021 124 A1 betrifft ein Bediensystem für ein Fahrzeug mit einer Eingabeeinheit, einer Ausgabeeinheit und einer Spellerfunktion, mit welcher Informationen zeichenweise in das Bediensystem eingebbar sind und ein eingegebenes Zeichen oder eine eingegebene Zeichenkette bei Übereinstimmung mit einem ersten Zeichen eines in dem Bediensystem gespeicherten Listeneintrages einer Informations- oder Unterhaltungsapplikation oder mit der Anfangszeichenkette eines solchen Listeneintrages das eingegebene Zeichen oder die eingegebene Zeichenkette entsprechend dem Listeneintrag vervollständigt oder teilvervollständigt und über die Ausgabeeinheit optisch ausgegeben wird. Bei einer Vervollständigung oder Teilvervollständigung eines eingegebenen Zeichens oder einer eingegebenen Zeichenkette zu einem Listeneintrag erfolgt zusätzlich zur optischen Anzeige der vervollständigten Zeichenkette eine akustische Rückmeldung.

Die DE 10 2009 032 732 A1 beschreibt ein Verfahren zum Auswählen eines Ziels bereitgestellt durch Eingeben eines Ortsnamens eines Zielorts durch einen Nutzer in das Gerät, automatisches Überprüfen, ob der eingegebene Ortsname in einer vorgegebenen Datenbank des Geräts eindeutig ist, und Festlegen eines Ziels auf der Basis des Ortsnamens. Bei Mehrdeutigkeit wird eine Kennung für einen geographischen Ort innerhalb des Ziels in das Gerät eingegeben. Außerdem wird automatisch überprüft, ob die Kennung zusammen mit dem Ortsnamen zu einem eindeutigen Ort in der Datenbank führt.

Es ist Aufgabe der vorliegenden Erfindung, eine Vorrichtung zur Verfügung zu stellen, mit der ein Nutzer auf einfache und rasche Weise eine von einer Vorrichtung zur Verfügung gestellte Vervollständigung von Zeichen und/oder Symbolen in ein Eingabefeld übernehmen kann.

Diese Aufgabe wird gelöst durch die Vorrichtung gemäß Anspruch 1. Vorteilhafte Weiterbildungen der Erfindung sind Gegenstand der Unteransprüche und ergeben sich aus der Beschreibung sowie den beigefügten Figuren.

Erfindungsgemäß wird eine einem Fahrzeug zugeordnete Vorrichtung vorgeschlagen, die eine Bedieneinrichtung aufweist, mit der wenigstens alphanumerische Zeichen und/oder Symbole auswählbar und zu einer Zeichen- oder Funktionsgruppe zusammenstellbar sind, und eine Anzeigevorrichtung, mit der mittels einer Anzeigeeinrichtung (z.B. einem Bildschirm, Head-Up-Display) auswählbare Zeichen und/oder Symbole in wenigstens einem Auswahlfeld, und ausgewählte Zeichen, Symbole, Zeichen- oder Funktionsgruppe in wenigstens einem Eingabefeld anzeigbar sind. Weiter weist die Vorrichtung eine Speichereinrichtung mit darin gespeicherten Daten, und einer Datenverarbeitungseinrichtung, mit der Daten aus den in der Speichereinrichtung gespeicherten Daten nach vorgebbaren Kriterien unter Berücksichtigung der bisher von einem Nutzer ausgewählten Zeichen und/oder Symbole ausgewählt werden können.

Die Vorrichtung ist dadurch gekennzeichnet, dass sie dazu eingerichtet ist, auf der Anzeigeeinrichtung einen Vervollständigungs-Vorschlag mit wenigstens einem Vervollständigungs-Element in unmittelbarer Nachbarschaft zu einem im Auswahlfeld angewählten Zeichen oder Symbol anzuzeigen, sofern durch die Datenverarbeitungseinrichtung eine mögliche Vervollständigung des/der bisher ausgewählten Zeichen(s) und/oder Symbols/Symbole auf Grundlage der Daten in der Speichereinrichtung unter Berücksichtigung des/der bisher von einem Nutzer ausgewählten Zeichen(s) und/oder Symbols/Symbole und des vom Nutzer angewählten Zeichens oder Symbols ermittelt wird; das wenigstens eine Vervollständigungs-Element mittels der Bedieneinrichtung durch einen Nutzer anwählbar ist; und ein angewähltes Vervollständigungs-Element von einem Nutzer mittels der Bedieneinrichtung ausgewählt werden kann.

Durch die Anzeige eines Vervollständigungs-Vorschlags in unmittelbarer Nachbarschaft zu einem von einem Nutzer angewählten und in einem Auswahlfeld angezeigten Zeichen oder Symbol erhält der Nutzer zum einen genau in dem Bereich der Anzeigeeinrichtung, auf den er gerade blickt einen Hinweis darauf, dass von der Vorrichtung eine Vervollständigung des/der bisher ausgewählten Zeichen(s) und/oder Symbols/Symbole angeboten wird.

Durch die räumliche Nähe dieser Anzeige zu dem gerade angewählten Zeichen oder Symbol ist auch eine möglicherweise erforderliche Bedienhandlung zum An- und/oder Auswählen des Vervollständigungs-Vorschlags sehr erleichtert und kann ein solches An- und/oder Auswählen auf rasche und einfache Weise erfolgen.

Hierdurch kann die Zeit und die Aufmerksamkeit, die ein Nutzer für die Eingabe in die Vorrichtung benötigt, auf vorteilhafte Weise verkürzt werden, was im Sinne einer möglichst geringen Ablenkung eines Nutzers vom Straßenverkehr ("driver distraction") auch unter Sicherheitsgesichtspunkten sehr erwünscht ist.

Gemäß einer ersten vorteilhaften Weiterbildung der Erfindung ist die Vorrichtung dazu eingerichtet, den Vervollständigungs-Vorschlag unmittelbar oberhalb oder unterhalb des vom Nutzer angewählten Zeichens oder Symbols anzuzeigen.

Gemäß einer zweiten vorteilhaften Weiterbildung der Erfindung ist die Vorrichtung dazu eingerichtet, in dem Vervollständigungs-Vorschlag nur drei, bevorzugt nur zwei, besonders bevorzugt nur ein auswählbares Vervollständigungs-Element anzuzeigen.

Gemäß einer dritten vorteilhaften Weiterbildung der Erfindung ist die Vorrichtung dazu eingerichtet, eine Auswahl-Kennzeichnung in Form eines Cursor, eines waagerechten Strichs, einer Markierung und/oder Umrandung anzuzeigen.

Weiter kann die erfindungsgemäße Vorrichtung dazu eingerichtet sein, auswählbare Zeichen und/oder Symbole in dem wenigstens einem Auswahlfeld in einer einzeiligen, linearen Anordnung mittels der Anzeigeeinrichtung anzuzeigen. Ebenso ist es von Vorteil, wenn die Vorrichtung dazu eingerichtet ist, bestimmte Zeichen und/oder Symbole in Form von wenigstens einer Gruppe zusammenzufassen und die wenigstens eine Gruppe in dem Auswahlfeld in Form eines Gruppen-Symbols anzuzeigen.

Die Bedieneinrichtung der erfindungsgemäßen Vorrichtung kann wenigstens einen Dreh-Drück-Steller, Joy-Stick, ein Touchpad, eine berührungsempfindliche Anzeigeeinrichtung und/oder eine Vorrichtung zur Spracheingabe und Spracherkennung umfassen.

Weiter kann vorgesehen sein, dass die Vorrichtung dazu eingerichtet ist, dass ein Vervollständigungs-Element innerhalb eines Vervollständigungs-Vorschlags mittels Verschieben eines Joy-Sticks in eine Richtung senkrecht zu seiner Drehachse angewählt und durch ein Drücken des Joy-Sticks entlang seiner Drehachse ausgewählt werden kann und/oder für den Fall, dass der Vervollständigungs-Vorschlag nur ein Vervollständigungs-Element enthält, das Vervollständigungs-Element mittels Verschieben eines Joy-Sticks in eine Richtung senkrecht zu seiner Drehachse an- und ausgewählt werden kann.

Die erfindungsgemäße Vorrichtung kann auch einen Smart-Speller umfassen, mittels dessen ein ausgewähltes Zeichen oder Symbol, oder eine Sequenz von ausgewählten Zeichen und/oder Symbolen mit in der Speichereinrichtung gespeicherten Daten verglichen werden kann, und die Vorrichtung dazu eingerichtet ist, nur noch solche Zeichen und/oder Symbole in dem wenigstens einem Auswahlfeld anzuzeigen, die aufgrund des/der ausgewählten Zeichen(s) oder Symbols/Symbole und den in der Speichereinrichtung vorhandenen Daten als nächste Zeichen und/oder Symbole in Frage kommen.

Die vorliegende Erfindung wird anhand der beigefügten Zeichnungen näher erläutert.
- Fig. 1:: Ein erstes Beispiel einer Anzeige auf der Anzeigeeinrichtung der erfindungsgemäßen Vorrichtung;
- Fig. 2:: Ein zweites Beispiel einer Anzeige auf der Anzeigeeinrichtung der erfindungsgemäßen Vorrichtung.

Die Darstellungen in den Figuren sind rein schematisch und nicht maßstabsgerecht. Innerhalb der Figuren sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

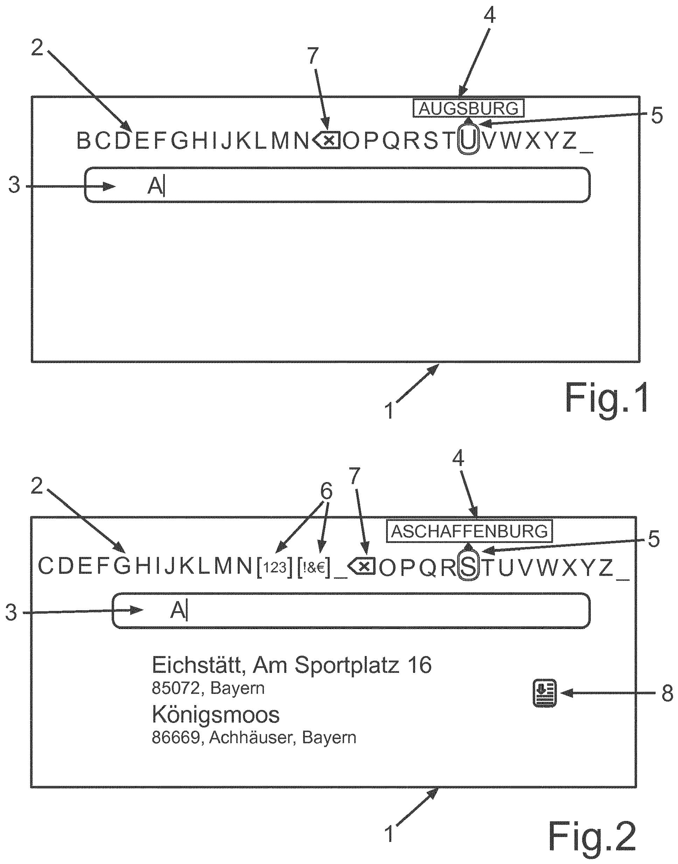

Wie in den Figuren 1 und 2 dargestellt ist, weist die Vorrichtung eine Anzeigeeinrichtung 1 auf. Auf der Anzeigeeinrichtung 1 sind auswählbare Zeichen und/oder Symbole in wenigstens einem Auswahlfeld 2, und ausgewählte Zeichen, Symbole, Zeichen- oder Funktionsgruppe in wenigstens einem Eingabefeld 3 anzeigbar. Mittels einer (in den Figuren nicht dargestellten) Bedieneinrichtung können Zeichen (Buchstaben, Zahlen, Leertaste) und Symbole (Prozent-Zeichen, Paragraphen-Zeichen, at-Zeichen, etc.) in dem Auswahlfeld 2 angewählt und anschließend ausgewählt werden. Ausgewählte Zeichen, Symbole, Zeichen- oder Funktionsgruppe können in dem wenigstens einem Eingabefeld 3 angezeigt werden.

Die Anordnung der Anzeige der Zeichen und Symbole in dem Auswahlfeld 2 ist nicht besonders beschränkt und es kann jede geeignete Anordnung gewählt sein. Bevorzugt werden die Zeichen und Symbole in einer einzeiligen, geradlinigen Anordnung auf der Anzeigeeinrichtung 1 angezeigt, wie dies in den Figuren 1 und 2 dargestellt ist.

Durch ein Betätigen der Bedieneinrichtung, beispielsweise einem Drehen eines Dreh-Drück-Stellers, einer Wisch-Bewegung auf einem Touchpad oder einem berührungsempfindlichen Bildschirm können Zeichen und Symbole aus dem Auswahlfeld 2 für eine Auswahl und Übernahme in das Eingabefeld 3 angewählt werden. Durch eine weitere Bedienhandlung können ein angewähltes Zeichen oder Symbol ausgewählt und anschließend in dem Eingabefeld 3 angezeigt werden. Das An- und Auswählen eines Zeichens oder Symbols kann selbstverständlich auch durch eine einzige Bedienhandlung erfolgen, beispielsweise wenn sich das auszuwählende Zeichen oder Symbol bereits bei einer Auswahl-Kennzeichnung angezeigt wird, oder wenn beispielsweise ein An- und Auswählen eines Zeichens oder Symbols durch einen Druck auf einen berührungsempfindlichen Bildschirm erfolgen kann.

Erfindungsgemäß ist vorgesehen, dass die Vorrichtung dazu eingerichtet ist, auf der Anzeigeeinrichtung 1 einen Vervollständigungs-Vorschlag 4 mit wenigstens einem Vervollständigungs-Element in unmittelbarer Nachbarschaft zu einem im Auswahlfeld 2 angewählten Zeichen oder Symbol anzuzeigen, sofern durch die Datenverarbeitungseinrichtung eine mögliche Vervollständigung des/der bisher ausgewählten Zeichen(s) und/oder Symbols/Symbole auf Grundlage der Daten in der Speichereinrichtung unter Berücksichtigung des/der bisher von einem Nutzer ausgewählten Zeichen(s) und/oder Symbols/Symbole und des vom Nutzer angewählten Zeichens oder Symbols ermittelt wird,

Bei den in der Speichereinrichtung der Vorrichtung vorhandenen Daten kann es sich beispielsweise um Ortsangaben (Ortschaften, Straßen/Plätze, Hausnummern, Firmennamen, "points of interest", etc.) für ein satellitengestütztes Navigationssystem, um Kontaktdaten (Namen, Vornamen, Telefonnummern, E-Mail-Adressen, Geburtsdaten, etc.) einer Telefon-Einrichtung, um Daten zu in einer Multi-Media-Anlage gespeicherten Multi-Media-Dateien, etc. handeln. Die obige Aufzählung ist nicht abschließend zu verstehen und es können die Daten in der Speichereinrichtung alle Daten umfassen, die mittels einer erfindungsgemäßen Vorrichtung auswählbar sind.

Die Kriterien, nach der mittels der Datenverarbeitungseinrichtung ermittelt wird, ob eine mögliche Vervollständigung des/der bisher ausgewählten Zeichen(s) und/oder Symbols/Symbole gegeben ist oder nicht, ist nicht besonders beschränkt und es können alle denkbaren und sinnvollen Kriterien hierfür angewandt werden. Einige der möglichen Kriterien sind oben im Bereich der Würdigung des Stands der Technik erwähnt.

Wird ein Vervollständigungs-Vorschlag 4 durch die Vorrichtung angezeigt, kann ein darin enthaltenes Vervollständigungs-Element mittels der Bedieneinrichtung durch einen Nutzer angewählt und/oder ausgewählt werden.

Möchte der Nutzer eine angebotene Vervollständigung des/der bisher ausgewählten Zeichen(s) und/oder Symbols/Symbole nicht vornehmen oder keinen der angezeigten Vervollständigungs-Vorschläge 4 auswählen, kann er selbstverständlich mittels der Bedieneinrichtung zum Beispiel das angewählte Zeichen oder Symbol auswählen und danach ein weiteres Zeichen oder Symbol anwählen. Nach jedem solchen Vorgang können dann von der Datenverarbeitungseinrichtung die bisher ausgewählten Zeichen und Symbole sowie das angewählte Zeichen oder Symbol mit den in der Speichereinrichtung vorhandenen Daten abgeglichen werden. Ergibt sich durch diesen Abgleich wieder eine mögliche Vervollständigung, wird von der Vorrichtung erneut ein Vervollständigungs-Vorschlag 4 in unmittelbarer Nachbarschaft zu dem vom Nutzer angewählten Zeichen oder Symbol angezeigt.

In vorteilhafter Weise wird ein Vervollständigungs-Vorschlag 4 mit dem/den darin enthaltenen und angezeigten Vervollständigungs-Element(en) unmittelbar oberhalb oder unterhalb des vom Nutzer angewählten Zeichens oder Symbols angezeigt.

Soweit in der vorliegenden Anmeldung die Begriffe "in unmittelbarer Nachbarschaft" oder "unmittelbar oberhalb oder unterhalb" verwendet wird, ist darunter zu verstehen, dass zwischen einem angewählten Zeichen oder Symbol und einem Vervollständigungs-Vorschlag 4 entweder keine anderen Elemente angezeigt werden oder lediglich ein oder einige wenige graphische Elemente, die zur besseren Kenntlichmachung von angewähltem Zeichen oder Symbol, dem Vervollständigungs-Vorschlag 4 und/oder der Korrelation zwischen angewähltem Zeichen oder Symbol und Vervollständigungs-Vorschlag 4 dienen, angezeigt werden. In den in Figuren 1 und 2 gezeigten Beispielen sind diese graphischen Elemente in Form einer Umrandung des angewählten Zeichens, eines auf den Vervollständigungs-Vorschlag 4 hinweisenden Dreiecks, und einer Umrandung des Vervollständigungs-Vorschlags 4 vorhanden.

In bevorzugter Weise umfasst ein angezeigter Vervollständigungs-Vorschlag 4 nur wenige auswählbare Vervollständigungs-Elemente, bevorzugt nicht mehr als drei, noch bevorzugter nicht mehr als zwei, und besonders bevorzugt nur ein Vervollständigungs-Element. Hierdurch wird die Zeit, die für ein Erkennen und eine Auswahl eines vorgeschlagenen Elements durch einen Nutzer erforderlich ist, in vorteilhafter Weise auf eine Minimum reduziert. Ein Beispiel, bei dem der Vervollständigungs-Vorschlag nur ein Vervollständigungs-Element aufweist, ist in den Figuren 1 und 2 dargestellt.

Die Auswahl-Kennzeichnung kann erfindungsgemäß bevorzugt in Form eines Cursor, eines waagerechten Strichs, einer Markierung und/oder Umrandung angezeigt werden. Wahlweise kann die Größe und/oder die Farbe, mit der ein angewähltes Zeichen oder Symbol angezeigt wird, sich auch von der Anzeige der anderen im Auswahlfeld 2 vorhandenen aber nicht angewählten Zeichen oder Symbole unterscheiden. Durch eine solche unterschiedliche Darstellung ist es für einen Nutzer zum Beispiel einfacher zu erkennen, welches Zeichen oder Symbol angewählt ist.

Weiter kann die erfindungsgemäße Vorrichtung dazu eingerichtet sein, bei einem mittels der Bedieneinrichtung angewählten, in/bei einer Auswahlkennzeichnung angezeigten Buchstaben-Zeichen anzuzeigen, dass zu dem Buchstaben-Zeichen wenigstens eine Abwandlung mit einem diakritischen Zeichen existiert.

Wenn beispielsweise aufgrund der für die Vorrichtung gewählten Sprache zu einem Buchstaben (z.B. A) ein Umlaut (z.B. Ä) und Abwandlungen unter Verwendung eines Accent (z.B. Ä und Ä) existieren, kann dieser Umstand erfindungsgemäß angezeigt werden, beispielsweise durch eine Anzeige der Abwandlungen in einer im Vergleich zum angewählten Buchstaben-Zeichen verkleinerten Darstellung oberhalb des Buchstaben-Zeichens. Die Art und Weise der Anzeige, dass zu dem Buchstaben-Zeichen Abwandlungen existieren, ist jedoch nicht auf diese Anzeigeart beschränkt und kann auf jede geeignete andere Weise erfolgen.

Die Abwandlungen können beispielsweise durch eine spezielle Weise der Bedienung der Bedieneinrichtung aufgerufen und anschließend wenigstens einer der Abwandlungen ausgewählt werden.

Beispielsweise kann bei einem Buchstaben, zu dem wenigstens eine Abwandlung mit einem diakritischen Zeichen existiert, die Zeichenerweiterung durch einen Longpush/Longpress auf den Buchstaben innerhalb des Zeichen-/Symbolbandes aktiviert werden. Die Anzeige des Zeichen-/Symbolbands wird dann um die jeweiligen zu dem Buchstaben gehörigen Zeichen erweitert. Nach Auswahl eines beliebigen dieser Zeichen, beispielsweise durch einen erneuten Longpush/Longpress auf das Zeichen, wird die Anzeige des Zeichen-/Symbolbands wieder auf die Grundzeichen reduziert.

In vielen Fällen kann der Platz für eine ausreichend große Anzeige aller zur Verfügung stehender Zeichen und/oder Symbole auf der Anzeigeeinrichtung 1 nicht ausreichen, so dass für eine Auswahl ein "Herein-Scrollen" von ursprünglich nicht auf der Anzeigeeinrichtung 1 angezeigten Zeichen und/oder Symbolen und ein "Heraus-Scrollen" von ursprünglich auf der Anzeigeeinrichtung 1 angezeigten Zeichen und/oder Symbolen erforderlich ist (z.B. in Form eines erweiterbaren Zeichen-/Symbolbands).

Das Zeichen-/Symbolband kann hierbei über einen Anfgangs- und einen Endanschlag verfügen, beispielsweise einen Anfangsanschlag beim Buchstaben "A" und einen Endanschlag bei der Ziffer "9". Um von einem solchen Anfangs- oder Endanschlag zeitsparend an das jeweils andere Ende des Zeichen-/Symbolbandes gelangen zu können, kann ein Cursorsprung vorgesehen sein. Wird an den jeweiligen Anfang oder das Ende des Zeichen-/Symbolbands gescrollt, wird beispielsweise der Cursor kurz abgefangen und gestoppt; nach einem erneuten Scrollen in die gleiche Richtung wie zuvor, kann dann beispielsweise durch eine "Wrap around Animation" der Cursor aus dem sichtbaren Bereich animiert und auf der anderen Seite des Zeichen-/Symbolbandes wieder eingeblendet werden.

Ein Herein-Scrollen und Heraus-Scrollen ist in vielen Fällen reduzier- oder sogar vermeidbar, wenn bestimmte Zeichen und/oder Symbole in Form von wenigstens einer Gruppe zusammengefasst und jede Gruppe mit Hilfe eines Gruppen-Symbols 6 in dem Auswahlfeld 2 angezeigt wird.

Wie in Fig. 2 gezeigt, kann eine erste Gruppe beispielsweise die Ziffern 0 bis 9 und eine zweite Gruppe eine Anzahl an Symbolen (!, &, €, %, §, *, etc.) umfassen. Es sollte für die Anzeige einer Gruppe ein geeignetes Gruppen-Symbol 6 gewählt werden, d.h. eine Anzeige, durch die für einen Nutzer möglichst leicht erkennbar ist, welche Elemente in der Gruppe enthalten sind (im in Fig. 2 gezeigten Beispiel "[123]" für die Gruppe der Ziffern 0 bis 9, und "[!&€]" für die Gruppe der anwähl- und auswählbaren Symbole). Eine Gruppe kann beispielsweise durch eine spezielle Art und Weise der Bedienung der Bedieneinrichtung aufgerufen und anschließend wenigstens ein Element der Gruppe ausgewählt werden. Diesbezüglich können beispielsweise die gleichen Bedienhandlungen vorgesehen sein, wie sie oben in Bezug auf die Zeichenerweiterung aufgrund von diakritischen Zeichen beschrieben sind.

Die bei der erfindungsgemäßen Vorrichtung vorgesehene Bedieneinrichtung ist nicht besonders beschränkt und es kann jede geeignete Bedieneinrichtung vorgesehen sein. Die Bedieneinrichtung umfasst beispielsweise wenigstens einen Dreh-Drück-Steller, Joy-Stick, ein Touchpad, eine berührungsempfindliche Anzeigeeinrichtung und/oder eine Vorrichtung zur Spracheingabe und Spracherkennung. Es können gleichzeitig ein oder mehrere der gleichen Bedieneinrichtungen oder eine Kombination von verschiedenen Bedieneinrichtungen vorgesehen sein. Ist die Bedieneinrichtung eine berührungsempfindliche Anzeigeeinrichtung können Bedieneinrichtung und Anzeigeeinrichtung 1 der Vorrichtung identisch sein.

Als ein bevorzugtes Beispiel für eine Bedieneinrichtung der erfindungsgemäßen Vorrichtung sei ein Dreh-Drück-Steller erwähnt, der wenigstens um eine Drehachse dreh- und betätigbar ist und der in wenigstens eine Richtung senkrecht zur Drehachse verschiebbar ist. Ein solcher Dreh-Drück-Steller wird oftmals auch als "Joy-Stick" bezeichnet.

Durch Drehen eines solchen Dreh-Drück-Stellers kann beispielsweise ein Zeichen, ein Symbol oder eine Gruppe angewählt werden und durch Drücken des Dreh-Drück-Stellers das angewählte Zeichen oder Symbol ausgewählt werden oder die Gruppe geöffnet (expandiert) werden. In gleicher Weise kann beispielsweise eine Lösch-Kennzeichnung 7 an- und ausgewählt werden.

Bei der erfindungsgemäßen Vorrichtung kann beispielsweise durch Verschieben eines Joy-Stick in eine Richtung senkrecht zu seiner Drehachse ein Vervollständigungs-Element innerhalb eines Vervollständigungs-Vorschlags 4 angewählt und durch ein Drücken des Joy-Sticks entlang seiner Drehachse ausgewählt werden. Oder es kann für den Fall, dass der Vervollständigungs-Vorschlag 4 nur ein Vervollständigungs-Element enthält, das Vervollständigungs-Element mittels Verschieben eines Joy-Sticks in eine Richtung senkrecht zu seiner Drehachse an- und ausgewählt werden.

Ist der Joy-Stick in einem Armaturenbrett eines Fahrzeugs vorgesehen, kann hierbei ein Verschieben des Joy-Stick nach oben oder unten, ist der Joy-Stick zwischen den Vordersitzen eines Fahrzeugs vorgesehen, kann hierbei ein Verschieben des Joy-Stick entlang der Fahrzeuglängsachse vorgesehen sein. Hierbei wird man vorteilhafter Weise die Verschiebe-Richtung für eine An- oder Auswahl eines Vervollständigungs-Elements wählen, die für einen Nutzer am naheliegendsten ist, beispielsweise ein Verschieben eines in einem Armaturenbrett eines Fahrzeugs vorgeshenen Joy-Stick nach oben, wenn das Vervollständigungs-Element oberhalb eines angewählten Zeichens oder Symbols angezeigt wird, wie dies in den Figuren 1 und 2 dargestellt ist.

Die erfindungsgemäße Vorrichtung kann auch einen sog. "Smart-Speller" umfassen. Mittels eines solchen "Smart-Speller" kann ein ausgewähltes Zeichen oder Symbol, oder eine Sequenz von ausgewählten Zeichen und/oder Symbolen mit in der Speichereinrichtung gespeicherten Daten verglichen werden kann und es können nur noch solche Zeichen und/oder Symbole in dem wenigstens einem Auswahlfeld 2 angezeigt werden, die aufgrund des/der ausgewählten Zeichen(s) oder Symbols/Symbole und den in der Speichereinrichtung vorhandenen Daten als nächste Zeichen und/oder Symbole in Frage kommen.

Dabei kann für das "in Frage kommen" wenigstens ein Auswahlkriterium vorgegeben sein, beispielsweise dass eine Übereinstimmung zwischen dem ausgewählten Zeichen oder Symbol, oder einer Sequenz von ausgewählten Zeichen und/oder Symbolen und einem Zeichen oder Symbol oder einer Sequenz von Zeichen und/oder Symbolen innerhalb wenigstens eines Datenelements bei den in der Speichereinrichtung vorhandenen Daten vorhanden sein muss. Wenn beispielsweise bezüglich einiger Datenelemente (z.B. Ortsnamen, Straßennamen, Vornamen, Nachnamen, Telefonnummern, E-Mail-Adressen, etc.) eine solche Übereinstimmung gegeben ist, werden durch den Smart-Speller nur noch die Zeichen und/oder Symbole in dem Auswahlfeld angezeigt, die für eine Vervollständigung der in Frage kommenden Datenelemente erforderlich sind.

Hierdurch ergibt sich für einen Nutzer eine Erleichterung bei der Anwahl und Auswahl des/der nächsten Zeichen(s) oder Symbols/Symbole und es wird die Gefahr eine Fehlanwahl und/oder Fehlauswahl verringert.

Auf der Anzeigeeinrichtung 1 der erfindungsgemäßen Vorrichtung können selbstverständlich weitere Elemente angezeigt werden, wie beispielsweise ein Hinweis- oder Hilfetext, ein Icon, bei dessen Auswahl Optionen der Vorrichtung konfigurierbar sind, Elemente einer zur Verfügung stehenden Auswahlliste und/oder eine Auswahllisten-Kennzeichnung 8 (Listenauswahl-Schaltfläche), etc, wie sie teilweise in Fig. 2 gezeigt sind. Diese Elemente können ebenfalls mittels entsprechender Bedienhandlungen aktivierbar sein.

Weiter kann auch vorgesehen sein, dass nach Auswahl eines Zeichens oder Symbols unmittelbar benachbart zu einer Auswahl-Kennzeichnung 5 eine Löschschaltfläche 7 angezeigt wird, die mittels der Bedieneinrichtung zum Löschen von wenigstens dem zuletzt ausgewählten, in einem Eingabefeld angezeigten Zeichen oder Symbol betätigbar ist.

Unter "unmittelbar benachbart" ist zu verstehen, das zwischen der Löschschaltfläche 7 und der Auswahl-Kennzeichnung 5 kein weiteres Zeichen oder Symbol angezeigt wird. Die Löschschaltfläche 7 kann grundsätzlich an jeder geeigneten Position unmittelbar benachbart zur Auswahl-Kennzeichnung 5 angezeigt werden, also beispielsweise unmittelbar links, rechts, oberhalb oder unterhalb der Auswahlkennzeichnung.

Die in den Figuren 1 und 2 dargestellten Beispiele beziehen sich auf ein Navigationssystem. Die vorliegende Erfindung ist selbstverständlich nicht auf die Anwendung bei einem Navigationssystem beschränkt sondern kann für alle Arten von einem Fahrzeug zugeordneten Vorrichtungen verwendet werden, bei denen das Anwählen und Auswählen von Zeichen und/oder Symbolen vorkommt oder vorkommen kann, wie beispielsweise eine Multi-Media-Anlage, eine Automobil-Telefonanlage oder ein in einem Fahrzeug integrierte Vorrichtung für einen Internetzugang.

Da einem Fachmann bekannt ist, wie die erfindungsgemäße Vorrichtung, die Anzeigevorrichtung mit der Anzeigeeinrichtung 1 (z.B. Bildschirm, Head-Up-Display) aufgebaut sein kann und wie die Komponenten der Vorrichtung zusammenwirken müssen, damit die erfindungsgemäße Vorrichtung die in der vorliegenden Anmeldung beschriebenen Eigenschaften aufweist, braucht im vorliegenden Fall hierauf nicht näher eingegangen zu werden.

Durch die Anzeige des Vervollständigungs-Vorschlags in unmittelbarer Nachbarschaft zu einem von einem Nutzer angewählten Zeichen oder Symbol wird einem Nutzer der erfindungsgemäßen Vorrichtung eine optimale Möglichkeit zum Anwählen und Auswählen einer von der Vorrichtung angebotenen Vervollständigung von wenigstens einem bereits ausgewählten Zeichen oder Symbol und der Übernahme der Vervollständigung in ein Eingabefeld 3 an die Hand gegeben.

Hierdurch ergibt sich eine optimale Unterstützung für den Nutzer. Auch verringert sich die Zeitdauer und die Aufmerksamkeit, die ein Nutzer für den Auswahl-/Eingabevorgang benötigt, wodurch eine im Sinne der Verkehrssicherheit unerwünschte Ablenkung des Fahrers vom Straßenverkehr minimiert wird.

## Patentansprüche

1. Einem Fahrzeug zugeordnete Vorrichtung, mit einer Bedieneinrichtung, mit der wenigstens alphanumerische Zeichen und/oder Symbole auswählbar und zu einer Zeichen- oder Funktionsgruppe zusammenstellbar sind, und mit einer Anzeigevorrichtung, mit der mittels einer Anzeigeeinrichtung (1) auswählbare Zeichen und/oder Symbole in wenigstens einem Auswahlfeld (2), ausgewählte Zeichen, Symbole, Zeichen- oder Funktionsgruppe in wenigstens einem Eingabefeld (3) anzeigbar sind, einer Speichereinrichtung mit darin gespeicherten Daten, und einer Datenverarbeitungseinrichtung zum Auswählen von Daten aus den in der Speichereinrichtung gespeicherten Daten nach vorgebbaren Kriterien unter Berücksichtigung der bisher von einem Nutzer ausgewählten Zeichen und/oder Symbole
**dadurch gekennzeichnet, dass**
die Vorrichtung dazu eingerichtet ist,
auf der Anzeigeeinrichtung (1) einen Vervollständigungs-Vorschlag (4) mit wenigstens einem Vervollständigungs-Element in unmittelbarer Nachbarschaft zu einem im Auswahlfeld (2) angewählten Zeichen oder Symbol anzuzeigen, sofern durch die Datenverarbeitungseinrichtung eine mögliche Vervollständigung des/der bisher ausgewählten Zeichen(s) und/oder Symbols/Symbole auf Grundlage der Daten in der Speichereinrichtung unter Berücksichtigung des/der bisher von einem Nutzer ausgewählten Zeichen(s) und/oder Symbols/Symbole und des vom Nutzer angewählten Zeichens oder Symbols ermittelt wird,
dass das wenigstens eine Vervollständigungs-Element mittels der Bedieneinrichtung durch einen Nutzer anwählbar ist, und
dass ein angewähltes Vervollständigungs-Element von einem Nutzer mittels der Bedieneinrichtung ausgewählt und in das Eingabefeld (3) übernommen werden kann.

2. Vorrichtung gemäß Anspruch 1,
**dadurch gekennzeichnet, dass**
die Vorrichtung dazu eingerichtet ist,
den Vervollständigungs-Vorschlag (4) unmittelbar oberhalb oder unterhalb des vom Nutzer angewählten Zeichens oder Symbols anzuzeigen.

3. Vorrichtung gemäß Anspruch 1 oder 2,
**dadurch gekennzeichnet, dass**
die Vorrichtung dazu eingerichtet ist,
in dem Vervollständigungs-Vorschlag (4) nur drei, bevorzugt nur zwei, besonders bevorzugt nur ein auswählbares Vervollständigungs-Element anzuzeigen.

4. Vorrichtung gemäß einem der vorhergehenden Ansprüche,
**dadurch gekennzeichnet, dass**
die Vorrichtung dazu eingerichtet ist,
eine Auswahl-Kennzeichnung (5) in Form eines Cursor, eines waagerechten Strichs, einer Markierung und/oder Umrandung anzuzeigen.

5. Vorrichtung gemäß einem der vorhergehenden Ansprüche,
**dadurch gekennzeichnet, dass**
die Vorrichtung dazu eingerichtet ist,
auswählbare Zeichen und/oder Symbole in dem wenigstens einem Auswahlfeld (2) in einer einzeiligen, linearen Anordnung mittels der Anzeigeeinrichtung (1) anzuzeigen.

6. Vorrichtung gemäß einem der vorhergehenden Ansprüche,
**dadurch gekennzeichnet, dass**
die Vorrichtung dazu eingerichtet ist,
bestimmte Zeichen und/oder Symbole in Form von wenigstens einer Gruppe zusammenzufassen und die wenigstens eine Gruppe in dem Auswahlfeld (2) in Form eines Gruppen-Symbols (6) anzuzeigen.

7. Vorrichtung gemäß einem der vorhergehenden Ansprüche,
**dadurch gekennzeichnet, dass**
die Bedieneinrichtung wenigstens einen Dreh-Drück-Steller, Joy-Stick, ein Touchpad, eine berührungsempfindliche Anzeigeeinrichtung und/oder eine Vorrichtung zur Spracheingabe und Spracherkennung umfasst.

8. Vorrichtung gemäß Anspruch 7,
**dadurch gekennzeichnet, dass**
die Vorrichtung dazu eingerichtet ist,
dass ein Vervollständigungs-Element innerhalb eines Vervollständigungs-Vorschlags (4) mittels Verschieben eines Joy-Sticks in eine Richtung senkrecht zu seiner Drehachse angewählt und durch ein Drücken des Joy-Sticks entlang seiner Drehachse ausgewählt werden kann und/oder für den Fall, dass der Vervollständigungs-Vorschlag (4) nur ein Vervollständigungs-Element enthält, das Vervollständigungs-Element mittels Verschieben eines Joy-Sticks in eine Richtung senkrecht zu seiner Drehachse an- und ausgewählt werden kann.

9. Vorrichtung gemäß einem der vorhergehenden Ansprüche,
**dadurch gekennzeichnet, dass**
sie einen Smart-Speller umfasst, mittels dessen ein ausgewähltes Zeichen oder Symbol, oder eine Sequenz von ausgewählten Zeichen und/oder Symbolen mit in der Speichereinrichtung gespeicherten Daten verglichen werden kann und
die Vorrichtung dazu eingerichtet ist, nur noch solche Zeichen und/oder Symbole in dem wenigstens einem Auswahlfeld (2) anzuzeigen, die aufgrund des/der ausgewählten Zeichen(s) oder Symbols/Symbole und den in der Speichereinrichtung vorhandenen Daten als nächstes Zeichen und/oder Symbol in Frage kommen.
